# EUROPEAN PATENT APPLICATION

(11) **EP 1 153 992 A1**
(43) Date of publication of application: **14.11.2001**
(21) Application number: 01111338.8
(22) Date of filing: 09.05.2001
(51) Int. Cl.: C09D 11/00

(54) **Ink jet recording ink composition containing a pigment coated with a resin**

(30) Priority: 10.05.2000 JP 2000137198; 08.05.2001 JP 2001137134
(71) Applicant: SEIKO EPSON CORPORATION, Tokyo 163 (JP)
(72) Inventor: Sano, Tsuyoshi, Suwa-shi, Nagano-ken 392-8502 (JP); Takemoto, Kiyohiko, Suwa-shi, Nagano-ken 392-8502 (JP)
(74) Representative: Grünecker, Kinkeldey, Stockmair & Schwanhäusser Anwaltssozietät

(57) **Abstract**

An ink composition for ink jet recording is provided which possesses excellent printing stability, ejection stability, and storage stability and can yield good images, especially images having excellent color reproduction. The ink composition for ink jet recording comprises at least a colorant, a penetrating agent, a water-soluble organic solvent, and water, the colorant comprising a pigment coated with a resin which is an anionic group-containing polymer, the content of the pigment being in the range of 35 to 90% by weight based on the colorant, the penetrating agent comprising an acetylene glycol surfactant and/or a polysiloxane surfactant, the water-soluble organic solvent comprising at least an alkyl ether derivative of a polyhydric alcohol, wherein the alkyl has 3 or more carbon atoms, and/or a 1,2-alkanediol.

## Description

### BACKGROUND OF THE INVENTION

### Field of the Invention

The present invention relates to a pigment-based ink composition which is preferably used for ink jet recording.

### Background Art

Ink jet recording is a printing method wherein droplets of an ink composition are ejected and deposited on recording media, such as paper, to perform printing. The feature of the ink jet recording method is that images having high quality with high resolution can be printed at a high speed by means of a relatively inexpensive apparatus.

Ink compositions used in ink jet recording generally comprise water as a main ingredient and, added to water, a colorant and a wetting agent, such as glycerin, for clogging preventive purposes and the like. A large number of water-soluble dyes have been used as the colorant for the ink composition for ink jet recording from the viewpoints of, for example, high chroma of the coloring material, a wide variety of usable coloring materials, and solubility in water.

On the other hand, however, some dyes are poor in various properties such as lightfastness and waterfastness, and, thus, prints produced by dye-based ink compositions have poor lightfastness and waterfastness. The use of specialty paper having an ink-absorptive layer for ink jet recording has improved the waterfastness of prints in some cases. However, the waterfastness of prints produced on plain paper is not yet satisfactory.

Pigments are superior to dyes in lightfastness and waterfastness, and, thus, in recent years, studies have been made on the use of pigments as a colorant in ink compositions for ink jet recording, for lightfastness and waterfastness improvement purposes. Here since pigments are generally insoluble in water, the utilization of pigments in water-based ink compositions necessitates the adoption of a method which comprises mixing a pigment, for example, with a resin called a dispersant, stably dispersing the mixture in water and then preparing the dispersion as an ink composition.

In order to stably disperse a pigment in an aqueous system, it is necessary to study the type and particle diameter of pigments, the type of resins used, dispersing means. A large number of dispersion methods and inks for ink jet recording have been proposed in the art. For example, Japanese Patent Laid-Open No. 252467/1991 proposes an ink composition comprising water, a styrene-maleic acid copolymer, ε-caprolactam, and a pigment, and Japanese Patent Laid-Open No. 79680/1991 proposes an ink composition comprising an aqueous medium, a styrene-maleic acid copolymer, and a copper phthalocyanine pigment.

Further, for ink compositions using pigments as the colorant, there is a need to improve the rubbing/scratch resistance of printed images. Specifically, unlike dyes which permeate the interior of recording media, pigments stay on the surface of recording media and, thus, the rubbing/scratch resistance should be improved by some means.

When the utilization of pigments as the colorant in inks for ink jet recording is taken into consideration, pigments are superior to dyes in lightfastness and waterfastness, but on the other hand, the number of types of usable pigments is smaller than the number of types of usable dyes. In fact, when a colorant is used as the ink for ink jet recording, satisfactory studies should also be made on lightfastness and waterfastness, as well as on hue.

Furthermore, a proposal has also been made on an enhancement in penetration of ink compositions, shortening of drying time, and the formation of larger pixels (for example, dots) in a smaller amount of ink. For pigment-based ink compositions, however, in some cases, due to the relationship with the pigment and other ingredients, the penetration cannot be satisfactorily imparted, or the penetrating agent is detrimental to stable dispersion of the pigment.

### SUMMARY OF THE INVENTION

The present inventors have now found that an ink composition comprising a combination of a resin-coated pigment as a colorant with specific penetrating agent and aqueous organic solvent possesses excellent printing stability, ejection stability, and storage stability and, at the same time, can realize good images, especially images possessing excellent color reproduction.

Accordingly, it is an object of the present invention to provide an ink composition for ink jet recording, which possesses excellent printing stability, ejection stability, and storage stability and can yield good images, especially images having excellent color reproduction.

According to one aspect of the present invention, there is provided an ink composition for ink jet recording, comprising at least a colorant, a penetrating agent, a water-soluble organic solvent, and water,
said colorant comprising a pigment coated with a resin which is a polymer having an anionic group(s), the content of the pigment being in the range of 35 to 90% by weight based on the colorant,
said penetrating agent comprising
   (a) 0.1 to 5% by weight, based on the ink composition, of an acetylene glycol surfactant and/or
   (b) a polysiloxane surfactant represented by formula (I) 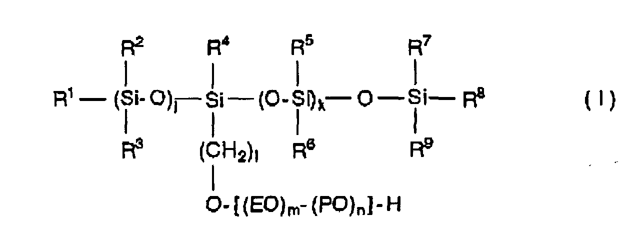 wherein
      R¹ to R⁹ each independently represent a C₁₋₆ alkyl group,
      j and k each independently represent an integer of 1 or more,
      EO represents an ethyleneoxy group,
      PO represents a propyleneoxy group,
      m and n are an integer of 0 or more, provided that m + n is an integer of 1 or more, and
      EO and PO may be arranged, regardless of order in the parentheses ([ ]), randomly or as blocks joined together,
said water-soluble organic solvent comprising at least
   (c) 1 to 15% by weight, based on the ink composition, of an alkyl ether derivative of a polyhydric alcohol wherein the alkyl has 3 or more carbon atoms, and/or
   (d) a 1,2-alkanediol.

### DESCRIPTION OF THE PREFERRED EMBODIMENTS

The ink composition according to the present invention is used in recording methods using ink compositions, for example, ink jet recording, recording methods using writing utensils, such as pens, and other various printing methods. Particularly preferably, the ink composition according to the present invention is used in the ink jet recording method.

The ink composition according to the present invention basically comprises at least a colorant, a penetrating agent, a water-soluble organic solvent, and water. The ink composition according to the present invention advantageously possesses excellent printing stability, ejection stability, and storage stability and can realize good images, especially images having excellent color reproduction.

### Colorant

The colorant used in the ink composition according to the present invention comprises a pigment coated with a resin. According to the present invention, this resin is a polymer containing an anionic group(s), and the content of the pigment based on the colorant is in the range of 35 to 90% by weight. This type of colorants are described in Japanese Patent Laid-open Nos. 151342/1997, 140065/1998, 209672/1999, 172180/1999, 25440/1998, and 43636/1999.

### a) Pigment

Pigments are used as the colorant in the present invention. Pigments include organic pigments and carbon black. Specific examples of organic pigments include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, isoindolinone pigments, azomethine pigments, and azo pigments. The carbon black may be any of neutral, acidic, and basic carbon blacks. Specific examples of pigments usable in the ink composition according to the present invention are as follows.

Pigments for cyan ink compositions include C.I. Pigment Blue 1, C.I. Pigment Blue 2, C.I. Pigment Blue 3, C.I. Pigment Blue 15 : 3, C.I. Pigment Blue 15 : 4, C.I. Pigment Blue 15 : 34, C.I. Pigment Blue 16, C.I. Pigment Blue 22, C.I. Pigment Blue 60 and the like; and C.I. Vat Blue 4, C.I. Vat Blue 60 and the like. The pigment for cyan ink compositions is preferably one member or a mixture of two or more members selected from the group consisting of C.I. Pigment Blue 15 : 3, C.I. Pigment Blue 15 : 4, and C.I. Pigment Blue 60. The above pigment is contained in an amount of about 0.5 to 10% by weight, preferably about 1 to 5% by weight, based on the cyan ink composition.

Pigments for magenta ink compositions include C.I. Pigment Red 5, C.I. Pigment Red 7, C.I. Pigment Red 12, C.I. Pigment Red 48 (Ca), C.I. Pigment Red 48 (Mn), C.I. Pigment Red 57 (Ca), C.I. Pigment Red 57 : 1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Red 209. The pigment for magenta ink compositions is preferably one member or a mixture of two or more members selected from the group consisting of C.I. Pigment Red 122, C.I. Pigment Red 202, and C.I. Pigment Red 209. The above pigment is contained in an amount of about 0.5 to 10% by weight, preferably about 1 to 5% by weight, based on the magenta ink composition.

Pigments for yellow ink compositions include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185. The pigment for yellow ink compositions is preferably one member or a mixture of two or more members selected from the group consisting of C.I. Pigment Yellow 74, C.I. Pigment Yellow 109, C.I. Pigment Yellow 110, C.I. Pigment Yellow 128, and C.I. Pigment Yellow 138. The above pigment is contained in an amount of about 0.5 to 10% by weight, preferably about 1 to 5% by weight, based on the yellow ink composition.

Pigments for orange ink compositions include C.I. Pigment Orange 36, C.I. Pigment Orange 43, and a mixture of these pigments. The above pigment is contained in an amount of about 0.5 to 10% by weight, preferably about 1 to 5% by weight, based on the orange ink composition.

Pigments for green ink compositions include C.I. Pigment Green 7, C.I. Pigment Green 36, and a mixture of these pigments. The above pigment is contained in an amount of about 0.5 to 10% by weight, preferably about 1 to 5% by weight, based on the green ink composition.

Pigments usable for black ink compositions include: those manufactured by Mitsubishi Chemical Corporation, for example, No. 2300, No. 900, MCF 88, No. 33, No. 40, No. 45, No. 52, MA 7, MA 8, MA 100, and No. 2200 B; those manufactured by Columbian Carbon Co., Ltd., for example, Raven 5750, Raven 5250, Raven 5000, Raven 3500, Raven 1255, and Raven 700; those manufactured by Cabot Corporation, for example, Regal 400 R, Regal 330 R, Regal 660 R, Mogul L, Monarch 700, Monarch 800, Monarch 880, Monarch 900, Monarch 1000, Monarch 1100, Monarch 1300, and Monarch 1400; and those manufactured by Degussa, for example, Color Black FW 1, Color Black FW 2, Color Black FW 2 V, Color Black FW 18, Color Black FW 200, Color Black S 150, Color Black S 160, Color Black S 170, Printex 35, Printex U, Printex V, Printex 140 U, Special Black 6, Special Black 5, Special Black 4A, and Special Black 4. They may be used alone or as a mixture of two or more. The above pigment is contained in an amount of about 0.5 to 10% by weight, preferably about 1 to 5% by weight, based on the black ink composition.

According to the present invention, the content of the pigment is in the range of about 35 to 90% by weight, preferably about 50 to 90% by weight, based on the colorant. When the pigment content falls within this range, a good colorant can be realized. Further, in the pigment used in the present invention, preferably, primary particles have a maximum diameter of not more than about 300 nm, more preferably not more than about 200 nm, and an average diameter in the range of about 10 to 150 nm, more preferably in the range of about 10 to 100 nm.

In the colorant according to the present invention, the pigment is coated with a resin described below and optionally a curing agent or an additional polymer compound. In this case, the maximum particle diameter of the colorant is preferably not more than 1,000 nm, more preferably not more than 500 nm. The average particle diameter of the colorant is preferably not more than 300 nm, more preferably not more than 250 nm. According to a preferred embodiment of the present invention, the maximum particle diameter of the colorant is not more than 1,000 nm, and, at the same time, the average particle diameter is not more than 300 nm.

### b) Resin

According to the present invention, the resin coats the pigment to form a colorant. The resin constituting the colorant is self-dispersible or soluble in water, and, to this end, a polymer compound having anionic (acidic) groups is used. In general, the number average molecular weight of the resin is preferably in the range of about 1,000 to 100,000, particularly preferably in the range of about 3,000 to 50,000. Preferably, this resin is dissolved in an organic solvent to form a solution. When the number average molecular weight of the resin falls within this range, the resin can satisfactorily function as a coating film in the colorant, or as a coating in the ink composition.

The resin as such may be self-dispersible or soluble in water. Alternatively, such function may be added or introduced into the resin. Accordingly, for example, the resin may be neutralized with an organic amine or an alkali metal to introduce an anionic group(s), such as carboxyl, sulfonic acid, or phosphonic acid groups. One or two or more anionic groups, which may be the same or different, may be introduced into the resin. According to the present invention, preferably, the resin is neutralized with a base to introduce carboxyl groups into the resin.

Thus, according to the present invention, the resin is preferably used in the form of a salt with an alkali metal or an organic amine. When the resin is used in the form of a salt, an ink composition can be provided which possesses excellent redispersibility and reliability. Specific examples of the salt of the resin with an alkali metal include a salt of the resin with an alkali metal, such as lithium, sodium, or potassium, preferably a salt formed, for example, using sodium hydroxide, potassium hydroxide, or lithium hydroxide, more preferably potassium hydroxide. Specific examples of the resin with the organic amine include salts of the resin with volatile amine compounds, such as ammonia, triethylamine, tributylamine, dimethylethanolamine, diisopropanolamine, or morpholine, or with high-boiling organic amines, which are less likely to be volatile, *such as* diethanolamine or triethanolamine.

Regarding the content of anionic groups in the anionic group-containing resin, the acid value is preferably not less than about 30 KOH mg/g, more preferably in the range of about 50 to 250 KOH mg/g. When the resin falls within this acid value range, the storage stability of the coated pigment in the colorant can be improved and the waterfastness of recorded images can be significantly improved.

Specific examples of resins usable in the present invention include anionic group-containing materials, for example, polyvinyl resins, such as polyvinyl chloride, polyvinyl acetate, polyvinyl alcohol, and polyvinyl butyral, polyester resins, such as alkyd resin and phthalic resin, amino materials, such as melamine resin, melamine-formaldehyde resin, amino alkyd co-condensation resin, and urea resin, thermoplastic, thermosetting, or modified acrylic, epoxy, polyurethane, polyether, polyamide, unsaturated polyester, phenolic, silicone, fluoro polymeric compounds, or copolymers of components constituting the above polymeric compounds or mixtures of the above polymeric compounds.

In the resin according to the present invention, a reactive active group, such as a glycidyl group, an isocyanate group, a hydroxyl group, or an α,β-ethylenically unsaturated double bond (vinyl group), is previously added as a pendant group to the resin per se, or alternatively may be mixed with a crosslinking agent having a reactive active group, for example, a photocuring agent, such as melamine resin, urethane resin, epoxy resin, or ethylenically unsaturated monomer or oligomer. Advantageously, the resin, which has been treated in this manner, can further improve properties, such as solvent resistance and fastness properties, of the coated wall of the pigment and can enhance the film strength after the formation of a coating of the ink composition on a recording medium.

Among the above resins, the anionic acrylic resin may be produced, for example, by polymerizing, in a solvent, an anionic group-containing acrylic monomer (hereinafter referred to as "anionic group-containing acrylic monomer") and optionally other monomer copolymerizable with the acrylic monomer. Anionic group-containing acrylic monomers include, for example, acrylic monomers containing one or more anionic groups selected from the group consisting of carboxyl, sulfonic acid, and phosphonic acid groups. Among them, a carboxyl-containing acrylic monomer is particularly preferred.

Specific examples of carboxyl-containing acrylic monomers include acrylic acid, methacrylic acid, crotonic acid, ethacrylic acid, propylacrylic acid, isopropylacrylic acid, itaconic acid, and fumaric acid. Among them, acrylic acid or methacrylic acid is preferred. Specific examples of sulfonic acid group-containing acrylic monomers include sulfoethyl methacrylate and butylacrylamidesulfonic acid. Specific examples of phosphonic acid group-containing acrylic monomers include phosphoethyl methacrylate.

Specific examples of other monomers copolymerizable with the anionic group-containing acrylic monomer include: (meth)acrylic esters, such as methyl acrylate, ethyl acrylate, isopropyl acrylate, n-propyl acrylate, n-butyl acrylate, t-butyl acrylate, 2-ethylhexyl acrylate, n-octyl acrylate, lauryl acrylate, benzyl acrylate, methyl methacrylate, ethyl methacrylate, isopropyl methacrylate, n-propyl methacrylate, n-butyl methacrylate, isobutyl methacrylate, t-butyl methacrylate, 2-ethylhexyl methacrylate, n-octyl methacrylate, lauryl methacrylate, stearyl methacrylate, tridecyl methacrylate, and benzyl methacrylate; addition reaction products between oil and fatty acids and (meth)acrylic ester monomers having an oxirane structure, such as an addition reaction product between stearic acid and glycidyl methacrylate; addition reaction products between oxirane compounds containing an alkyl group having 3 or more carbon atoms and (meth)acrylic acid; styrene monomers, such as styrene, α-methylstyrene, o-methylstyrene, m-methylstyrene, p-methylstyrene, and p-tert-butylstyrene; itaconic esters, such as benzyl itaconate; maleic esters, such as dimethyl maleate; fumaric esters, such as dimethyl fumarate; and acrylonitrile, methacrylonitrile, vinyl acetate, isobornyl acrylate, isobornyl methacrylate, aminoethyl acrylate, aminopropyl acrylate, methylaminoethyl acrylate, methylaminopropyl acrylate, ethylaminoethyl acrylate, ethylaminopropyl acrylate, aminoethylamide of acrylic acid, aminopropylamide of acrylic acid, methylaminoethylamide of acrylic acid, methylaminopropylamide of acrylic acid, ethylaminoethylamide of acrylic acid, ethylaminopropylamide of acrylic acid, methacrylic acid amide, aminoethyl methacrylate, aminopropyl methacrylate, methylaminoethyl methacrylate, methylaminopropyl methacrylate, ethylaminoethyl methacrylate, ethylaminopropyl methacrylate, aminoethylamide of methacrylic acid, aminopropylamide of methacrylic acid, methylaminoethylamide of methacrylic acid, methylaminopropylamide of methacrylic acid, ethylaminoethylamide of methacrylic acid, ethylaminopropylamide of methacrylic acid, hydroxymethyl acrylate, 2-hydroxyethyl acrylate, 2-hydroxypropyl acrylate, hydroxymethyl methacrylate, 2-hydroxyethyl methacrylate, 2-hydroxypropyl methacrylate, N-methylolacrylamide, and allyl alcohol.

Crosslinkable functional group-containing monomers may be as follows. A blocked isocyanate group-containing polymerizable monomer may be easily produced by addition reacting an isocyanate group-containing polymerizable monomer, such as 2-methacryloyloxyethyl isocyanate, with a conventional blocking agent. Alternatively, the block isocyanate group-containing polymerizable monomer may be easily produced by addition reacting a compound containing an isocyanate group and a blocked isocyanate group with the vinyl copolymer containing a hydroxyl group and a carboxyl group. The compound containing an isocyanate group and a blocked isocyanate group may be easily produced by addition reacting a diisocyanate compound with a conventional blocking agent in a molar ratio of the diisocyanate compound to the blocking agent of about 1 : 1.

Epoxy-containing monomers include, for example, glycidyl (meth)acrylate and alicyclic epoxy-containing (meth)acrylate monomers.

1,3-Dioxolan-2-on-4-yl-containing monomers include, for example, 1,3-dioxolan-2-on-4-ylmethyl (meth)acrylate and 1,3-dioxolan-2-on-4-ylmethyl vinyl ether.

Examples of polymerization initiators includes peroxides, such as t-butyl peroxybenzoate, di-t-butyl peroxide, cumene hydroperoxide, acetyl peroxide, benzoyl peroxide, and lauroyl peroxide; and azo compounds, such as azobisisobutyronitrile, azobis-2,4-dimethylvaleronitrile, and azobiscyclohexanecarbonitrile.

Examples of solvents usable in the polymerization of the anionic group-containing acrylic monomer and optionally other monomer copolymerizable with the acrylic monomer include: aliphatic hydrocarbon solvents, such as hexane and mineral spirit; aromatic hydrocarbon solvents, such as benzene, toluene, and xylene; ester solvents, such as butyl acetate; ketone solvents, such as methyl ethyl ketone and isobutyl methyl ketone; alcohol solvents, such as methanol, ethanol, butanol, and isopropyl alcohol; and aprotic polar solvents, such as dimethylformamide, dimethyl sulfoxide, N-methyl pyrrolidone, and pyridine. These solvents may be used alone or as a combination of two or more.

### c) Curing agent or additional polymer compound

According to the present invention, the colorant preferably comprises a pigment coated with the resin comprising a curing agent and/or an additional polymer compound. The curing agent or the additional polymer compound cures the coated wall of the colorant and enhances the rubbing/scratch resistance of prints.

Specific examples of curing agents according to the present invention include: amino resins, such as melamine resin, benzoguanamine resin, and urea resin; phenolic resins, such as trimethylol phenol and condensation products thereof; polyisocyanates, such as tetramethylene diisocyanate (TDI), diphenylmethane diisocyanate (MDI), hexamethylene diisocyanate (HDI), naphthalene diisocyanate (NDI), isophorone diisocyanate (IPDI), xylylene diisocyanate (XDI), and modified isocyanates and blocked isocyanates of these isocyanates; amines, such as aliphatic amines, aromatic amines, N-methylpiperazine, triethanolamine, morpholine, dialkylamino ethanol, and benzyldimethylamine; acid anhyrides, such as polycarboxylic acid, phthalic anhydride, maleic anhydride, hexahydrophthalic anhydride, pyromellitic anhydride, benzophenonetetracarboxylic anhydride, and ethylene glycol bistrimellitate; epoxy compounds, such as bisphenol A type epoxy resin, phenolic epoxy resin, glycidyl methacrylate copolymer, glycidyl carboxylate resin, and alicyclic epoxy; alcohols, such as polyether polyol, polybutadiene glycol, polycaprolactone polyol, trishydroxyethyl isocyanate (THEIC); and vinyl compounds, such as polyvinyl compounds as unsaturated group-containing compounds for use in radical curing with peroxide or UV curing or electron beam curing, polyallyl compounds, and reaction products between glycol or polyol and acrylic acid or methacrylic acid.

If necessary, more preferably, a photoinitiator, a polymerization initiator, or a catalyst is added to accelerate curing. Photoinitiators include, but are not limited to, benzoins, anthraquinones, benzophenones, sulfer-containing compounds, and dimethyl benzyl ketal. Examples of polymerization initiators include: peroxides, such as t-butyl peroxybenzoate, di-t-butyl peroxide, cumene hydroperoxide, acetyl peroxide, benzoyl peroxide, and lauroyl peroxide; and azo compounds, such as azobisisobutyronitrile, azobis-2,4-dimethylvaleronitrile, and azobiscyclohexanecarbonitrile. Catalysts include, for example, cobalt compounds and lead compounds.

Additional polymer compounds usable in the present invention include preferably those having a number average molecular weight of not less than 1,000, more preferably those having a number average molecular weight of 3,000 to 100,000 from the viewpoints of the film (coating) strength of the ink composition and the production of the pigment coating.

Examples of preferred additional polymer compounds include polymer compounds, for example, polyvinyl compounds, such as polyvinyl chloride, polyvinyl acetate, polyvinyl alcohol, and polyvinyl butyral, polyester compounds, such as alkyd resin and phthalic resin, amino compounds, such as melamine resin, melamine-formaldehyde resin, amino alkyd co-condensation resin, and urea resin, thermoplastic, thermosetting, or modified acrylic, epoxy, polyurethane, polyether, polyamide, unsaturated polyester, phenolic, silicone, or fluoro polymeric compounds, and copolymers of components constituting the above polymeric compounds or mixtures of the above polymer compounds.

### d) Other ingredients

The colorant according to the present invention basically comprises the above ingredients and may further comprise other ingredients. Regarding other ingredients, those, which may be contained in the colorant, include inorganic materials, such as titanium and aluminum, pigment derivatives, pigment dispersants, pigment wetting agents, organic solvents, plasticizers, ultraviolet absorbers, antioxidants, and fillers for ink compositions.

### Production of colorant

The colorant may be produced by processes disclosed in Japanese Patent Laid-Open Nos. 151342/1997, 140065/1998, 209672/1999, 172180/1999, 25440/1998, and 43636/1999 (which are incorporated by reference). The production processes disclosed in these publications will be briefly described.

Japanese Patent Laid-Open Nos. 151342/1997 and 140065/1998 disclose "phase inversion method" and "salting-out method."

### a) "Phase inversion method"

In the present invention, the "phase inversion method" basically refers to a self-dispersing (phase inversion emulsification) method wherein a mixed melt composed of a self-dispersible or soluble resin and a pigment is dispersed in water. This mixed melt may contain the above-described curing agent or additional polymer compound. Here the mixed melt may contain any of the state of being mixed without dissolution, the state of being dissolved and mixed, and the state of a combination of these states.

### b) "Salting-out method"

In the present invention, the "salting-out method" refers to a method which comprises the steps of: providing a hydrous cake composed of a resin and a pigment; partially or entirely neutralizing anionic groups contained in the resin in the hydrous cake with a basic compound to produce a colorant.

"Salting-out method" specifically comprises the steps of:
(1) dispersing a resin and a pigment in an alkaline aqueous medium and optionally heat-treating the dispersion to allow the resin to gel;
(2) bringing pH to a neutral value or the acid side to render the resin hydrophobic, thereby fixing the resin onto the pigment;
(3) if necessary, performing filtration and washing with water to prepare a hydrous cake;
(4) partially or entirely neutralizing anionic groups contained in the resin in the hydrous cake with a basic compound and then redispersing the neutralization product in an aqueous medium; and
(5) if necessary, heat-treating the dispersion to allow the resin to gel.

The "phase inversion method" and the "salting-out method" are more specifically described in Japanese Patent Laid-Open Nos. 151342/1997 and 140065/1998.

Japanese Patent Laid-Open Nos. 209672/1999 and 172180/1999 disclose a process for producing a colorant. This production process basically comprises the steps of:
(1) mixing an anionic group-containing resin or a solution of an anionic group-containing resin in an organic solvent with a basic compound to neutralize the resin;
(2) mixing a pigment with this mixed solution to prepare a suspension and then dispersing the pigment by means of a dispergator or the like to prepare a pigment dispersion;
(3) if necessary, removing the solvent by distillation;
(4) adding an acidic compound to precipitate the anionic group-containing resin to coat the pigment with the anionic group-containing resin;
(5) if necessary, performing filtration and washing with water; and
(6) adding a basic compound to neutralize anionic groups in the anionic group-containing resin and then dispersing the neutralization product in an aqueous medium to prepare an aqueous dispersion. The production process is more specifically disclosed in Japanese Patent Laid-Open Nos. 209672/1999 and 172180/1999.

### Penetrating agent

The ink composition according to the present invention may further comprise as a penetrating agent an acetylene glycol surfactant or a polysiloxane surfactant or a mixture thereof.

### (a) Acetylene glycol surfactant

Specific examples of preferred acetylene glycol surfactants usable in the present invention include compounds represented by formula 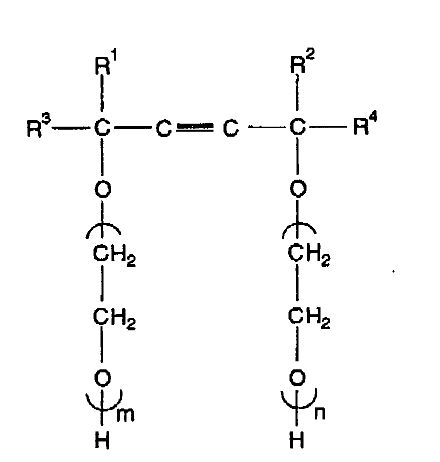 wherein 0 ≦ m + n ≦ 50; and R¹, R², R³, and R⁴ each independently represent an alkyl group (preferably an alkyl group having 1 to 6 carbon atoms).

Among the compounds represented by this formula, particularly preferred compounds include 2,4,7,9-tetramethyl-5-decyne-4,7-diol, 3,6-dimethyl-4-octyne-3,6-diol, and 3,5-dimethyl-1-hexyn-3-ol. Commercially available products may also be used as the acetylene glycol surfactants represented by the above formula. Specific examples thereof include Surfynol 82, Surfynol 104, Surfynol 440, Surfynol 465, Surfynol 485, and Surfynol TG (all the above products being available from Air Products and Chemicals Inc.) and OLFINE STG and OLFINE E 1010 (tradenames: manufactured by Nissin Chemical Industry Co., Ltd.).

Although the amount of the acetylene glycol surfactant added may be properly determined, the amount of the acetylene glycol surfactant is preferably about 0.1 to 5% by weight, more preferably about 0.5 to 3% by weight, based on the ink composition.

### (b) Polysiloxane surfactant

The ink composition according to the present invention comprises the compound represented by formula (I).

In formula (I), R¹ to R⁹ each independently represent a C₁₋₆ alkyl group, preferably a methyl group; j and k each independently represent an integer of 1 or more, preferably 1 to 2; m and n are an integer of 0 or more, provided that m + n is an integer of 1 or more, preferably 2 to 4.

According to a preferred embodiment of the present invention, the compound of formula (I) preferably satisfies j = k + 1. According to another preferred embodiment of the present invention, the compound of formula ( I ) is preferably such that all of R¹ to R' represent a methyl group, j is 2, k is 1, l is 1, m is an integer of 1 or more, and n is 0.

The amount of the compound of formula (I) added may be properly determined. However, the amount of the compound of formula (I) is preferably 0.03 to 3% by weight, more preferably about 0.1 to 2% by weight, still more preferably about 0.3 to 1% by weight.

The compound of formula (I) is commercially available, and commercially available products may also be used. For example, silicone surfactants BYK-345, BYK-346, and BYK-348 available from Bik-Chemie Japan K.K. may be utilized.

### Water-soluble organic solvent

### (c) Alkyl ether derivative of polyhydric alcohol

The ink composition of the present invention contains a water-soluble organic solvent comprising at least an alkyl ether derivative of a polyhydric alcohol wherein the alkyl has 3 or more carbon atoms. Preferably, the alkyl has 3 or more of carbon atoms and 6 or less of carbon atoms.

Specific examples of preferred alkyl ether derivatives of polyhydric alcohols, wherein the alkyl has 3 or more carbon atoms, include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n-propyl ether, and dipropylene glycol mono-iso-propyl ether.

The amount of the alkyl ether derivative of polyhydric alcohol added may be properly determined. However, the amount of this compound added is preferably about 1 to 15% by weight, more preferably about 1 to 10% by weight, based on the ink composition.

### (d) 1,2-Alkanediol

1,2-Alkanediol is preferably an 1,2-C₁₋₆ alkanediol, more preferably an 1,2-C₁₋₆ alkanediol, and most preferably 1,2-hexanediol. The amount of the 1,2-alkanediol added may be properly determined. The amount of this compound, however, is preferably about 1 to 15% by weight, more preferably about 2 to 10% by weight.

### Water, water-soluble organic solvent, and other optional ingredients

The ink composition according to the present invention preferably comprises an aqueous solvent comprising water and a water-soluble organic solvent. water may be pure water obtained by ion exchange, ultrafiltration, reverse osmosis, distillation or the like, or ultrapure water. Further, water, which has been sterilized, for example, by ultraviolet irradiation or by the addition of hydrogen peroxide, is suitable because, when the ink composition is stored for a long period of time, it can prevent the growth of mold or bacteria.

The water-soluble organic solvent is preferably a low-boiling organic solvent. Examples of preferred low-boiling organic solvents usable herein include methanol, ethanol, n-propyl alcohol, iso-propyl alcohol, n-butanol, sec-butanol, tert-butanol, iso-butanol, and n-pentanol. Particularly preferred are monohydric alcohols. The low-boiling organic solvent has the effect of shortening the time required for drying ink. The content of the low-boiling organic solvent is preferably about 1 to 10% by weight, more preferably about 1 to 5% by weight, based on the ink composition.

According to a preferred embodiment of the present invention, among the water-soluble organic solvents, those having a boiling point of 180°C or above are used. The use of water-soluble organic solvents having a boiling point of 180°C or above can impart water retention and wetting properties to the ink composition. As a result, storage of the ink composition for a long period of time neither causes coagulation of pigment nor an increase in the viscosity of the ink composition. Thus, excellent storage stability can be realized. Further, an ink composition can be realized which, even when allowed to stand in an open state, that is, when allowed to stand in contact with air at room temperature, can maintain the fluidity and the redispersibility for a long period of time, and, in addition, does not cause clogging of nozzles during printing or at the time of restarting after interruption of printing, thus offering high ejection stability.

specific examples of water-soluble organic solvents having a boiling point of 180°C or above include ethylene glycol (b.p.: 197°C; the boiling point being hereinafter described within parentheses), propylene glycol (187°C), diethylene glycol (245°C), pentamethylene glycol (242°C), trimethylene glycol (214°C), 2-butene-1,4-diol (235°C), 2-ethyl-1,3-hexanediol (243°C), 2-methyl-2,4-pentanediol (197°C), 1-methyl-2-pyrrolidone (202°C), 1,3-dimethyl-2-imidazolidinone (257-260°C), 2-pyrrolidone (245°C), glycerin (290°C), tripropylene glycol monomethyl ether (243°C), dipropylene glycol monoethyl glycol (198°C), dipropylene glycol monomethyl ether (190°C), dipropylene glycol (232°C), triethylene glycol monomethyl ether (249°C), tetraethylene glycol (327°C), triethylene glycol (288°C), diethylene glycol monobutyl ether (230°C), diethylene glycol monoethyl ether (202°C), and diethylene glycol monomethyl ether (194°C). They may be used alone or as a mixture of two or more. According to the present invention, among the water-soluble organic solvents, those having a boiling point of 200°C or above are more preferred.

The content of the water-soluble organic solvent is preferably about 10 to 40% by weight, more preferably 10 to 20% by weight.

According to a preferred embodiment of the present invention, the ink composition according to the present invention contains a saccharide, a tertiary amine, or an alkali hydroxide. The addition of the saccharide and the tertiary amine can impart wetting properties.

Specific examples of saccharides include monosaccharides, disaccharides, oligosaccharides (including trisaccharides and tetrasaccharides), and polysaccharides, and preferred examples thereof include glucose, mannose, fructose, ribose, xylose, arabinose, galactose, aldonic acid, glucitol, sorbit, maltose, cellobiose, lactose, sucrose, trehalose, and maltotriose. The polysaccharides refer to saccharides in a wide sense and embrace materials which widely exist in the natural world, such as alginic acid, α-cyclodextrin, and cellulose. Derivatives of these saccharides include reducing sugars of the above saccharides (for example, sugar alcohols represented by the general formula HOCH₂(CHOH)ₙCH₂OH wherein n is an integer of 2 to 5), oxidized sugars (for example, aldonic acid and uronic acid), amino acid, and thiosugars. Sugar alcohols are particularly preferred, and specific examples thereof include maltitol and sorbit. The content of the saccharide is preferably about 0.1 to 40% by weight, more preferably about 1 to 30% by weight.

Specific examples of tertiary amines include trimethylamine, triethylamine, triethanolamine, dimethylethanolamine, diethylethanolamine, triisopropenolamine, and butyldiethanolamine. They may be used alone or as a mixture of two or more. The amount of the tertiary amine added to the ink composition is preferably about 0.1 to 10% by weight, more preferably 0.5 to 5% by weight.

Specific examples of alkali hydroxides include potassium hydroxide, sodium hydroxide, and lithium hydroxide, and the amount of the alkali hydroxide added to the ink composition is preferably about 0.01 to 5% by weight, more preferably about 0.05 to 3% by weight.

The ink composition according to the present invention may further contain nozzle clogging preventives, preservatives, antimolds, antioxidants, electric conductivity adjustors, pH adjustors, solubilizers, viscosity modifiers, surface tension modifiers, oxygen absorbers, etc.

Examples of preservatives or antimolds include sodium benzoate, pentachlorophenol sodium, 2-pyridinethiol-1-oxide sodium, sodium sorbate, sodium dehydroacetate, and 1,2-dibenzothiazolin-3-one (Proxel CRL, Proxel BDN, Proxel GXL, Proxel XL-2, and Proxel TN, manufactured by ICI).

Examples of pH adjustors, solubilizers, or antioxidants include: amines, such as diethanolamine, triethanolamine, propanolamine, and morpholine, and modification products thereof; inorganic salts, such as potassium hydroxide, sodium hydroxide, and lithium hydroxide; ammonium hydroxide; quaternary ammonium hydroxide, such as tetramethylammonium; salts of carbonic acid, such as potassium carbonate, sodium carbonate, and lithium carbonate; salts of phosphoric acid, such as potassium phosphate, sodium phosphate, and lithium phosphate; N-methyl-2-pyrrolidone; urea compounds, such as urea, thiourea, and tetramethylurea; allophanates, such as allophanate and methyl allophanate; biurets, such as biuret, dimethylbiuret, and tetramethylbiuret; and L-ascorbic acid and salts thereof.

The ink composition according to the present invention may contain an ultraviolet absorber, and examples thereof include Tinuvin 328, 900, 1130, 384, 292, 123, 144, 622, 770, and 292, Irgacor 252 and 153, and Irganox 1010, 1076, 1035, and MD 1024, manufactured by Ciba-Geigy; and lanthanide oxides.

The ink composition according to the present invention has a surface tension of about 20 to 40 mN/m, preferably about 15 to 30 mN/m.

### Production process of ink composition

The ink composition according to the present invention may be prepared by dispersing and mixing the above ingredients together by means of a suitable method. A preferred production process is as follows. At the outset, a resin dispersion comprising a resin and optionally a curing agent or an additional polymer compound and a polymeric dispersant is prepared. The resin dispersion is mixed with a pigment by means of a suitable dispergator (for example, a ball mill, a sand mill, an attritor, a roll mill, an agitator mill, a Henschel mixer, a colloid mill, an ultrasonic homogenizer, a jet mill, or an angmill) to prepare a homogeneous colorant. Subsequently, water, a water-soluble organic solvent, a saccharide, a pH adjustor, a preservative, an antimold, etc. are added to the colorant, followed by satisfactory dissolution to prepare an ink solution. After the thorough stirring, the mixture is filtered to remove coarse particles and foreign matter causative of nozzle clogging to obtain a contemplated ink composition.

### EXAMPLES

The present invention is further illustrated by the following examples. However, it should be noted that the following examples are illustrative only and are not intended to limit the scope of the present invention.

### Synthesis of dispersed resin

### Resin dispersion 1

The following ingredients were mixed together in a one-liter beaker so that the total amount of the mixture was 500 g. Further, 4 g of tert-butylperoxy octoate was added as a polymerization initiator to prepare a mixed solution.

| | |
|---|---|
| n-Butyl methacrylate | 40 wt% |
| n-Butyl acrylate | 5 wt% |
| Styrene | 20 wt% |
| 2-Hydroxyethyl methacrylate | 15 wt% |
| Methacrylic acid | 20 wt% |

Separately, 500 g of methyl ethyl ketone was placed in one-liter flask, and the temperature of methyl ethyl ketone was raised to 75°C in a nitrogen atmosphere with stirring. The above mixed solution was then added dropwise to the heated methyl ethyl ketone at 75°C with stirring over a period of 3 hr. A reaction was further allowed to proceed at 75°C with stirring for additional 8 hr. Thereafter, the reaction mixture was self-cooled to 25°C, and was then diluted with methyl ethyl ketone to a solid content of 50%. Thus, a resin dispersion 1 having an acid value (KOH) of 130 and an average molecular weight of 15000 was prepared.

### Resin dispersion 2

A resin dispersion 2 having an acid value (KOH) of 70 and an average molecular weight of 13000 was prepared in the same manner as described above in connection with the resin dispersion 1, except that the following ingredients were used and the amount of tert-butylperoxy octoate as the polymerization initiator was changed to 5 g.

| | |
|---|---|
| n-Butyl methacrylate | 70 wt% |
| n-Butyl acrylate | 5 wt% |
| 2-Hydroxyethyl methacrylate | 15 wt% |
| Methacrylic acid | 10 wt% |

### Colorant: Preparation of pigment dispersions

### Pigment dispersions A to D

Pigment dispersions were prepared according to the following formulation.

| | |
|---|---|
| Pigment | 15 wt% |
| 5% Aqueous potassium hydroxide solution | 4 wt% |
| Resin dispersion 1 | 10 wt% |
| Ultrapure water | Balance |

The pigment was first mixed with the resin dispersion prepared above, and the mixture, together with glass beads (diameter: 1.7 mm, amount: 1.5 times (by weight) larger than the mixture), was dispersed for 2 hr in a sand mill (manufactured by Yasukawa Seisakusho). The glass beads were then removed, and the other ingredients were added to the dispersion, and the mixture was stirred at room temperature for 20 min, and was then filtered through a 5 µm-membrane filter.

The solvent in the filtrate was removed by distillation under the atmospheric pressure at 80°C. A 1 N hydrochloric acid solution was added dropwise to the residue with stirring to coagulate a resin layer, followed by suction filtration while washing with water to prepare a hydrous pigment cake. The hydrous cake was adjusted to pH 9 ± 0.5 by dropwise addition of a 5% aqueous potassium hydroxide solution with stirring. Further, ultrapure water was added thereto to a solid content of 20%. Thus, a pigment dispersion was prepared.

Pigments in respective pigment dispersions A to D thus obtained were as follows.
Pigment dispersion A: C.I. Pigment Red 122
Pigment dispersion B: C.I. Pigment Yellow 12B
Pigment dispersion C: C.I. Pigment Blue 15 : 3
Pigment dispersion D: carbon black

### Pigment dispersions E to H

Pigment dispersions E to H were prepared in the same manner as described above in connection with the pigment dispersions A to D, except that the following ingredients were used.

| | |
|---|---|
| Pigment | 20 wt% |
| 5% Aqueous potassium hydroxide solution | 5 wt% |
| Resin dispersion 2 | 20 wt% |
| Ultrapure water | Balance |

Pigments in respective pigment dispersions E to H thus obtained were as follows.
Pigment dispersion E: C.I. Pigment Red 122
Pigment dispersion F: C.I. Pigment Yellow 74
Pigment dispersion G: C.I. Pigment Blue 15 : 3
Pigment dispersion H: carbon black

### Preparation of ink compositions

All the ingredients except for the pigment dispersion were mixed together while stirring to prepare a mixed solution. Next, the above mixed solution was added dropwise to the pigment dispersion with stirring. Thus, ink compositions 1 to B having the following respective formulations were prepared.

| Ink composition 1 | |
|---|---|
| Pigment dispersion A (pigment: C.I. | |
| Pigment Red 122) | 20 wt% |
| Glycerin | 15 wt% |
| Triethylene glycol monobutyl ether | 8 wt% |
| Surfynol 465 | 0.9 wt% |
| Triethanolamine | 0.7 wt% |
| Ethylene glycol | 5 wt% |
| 2-Pyrrolidone | 3 wt% |
| EDTA | 0.05 wt% |
| Ultrapure water | Balance |

| Ink composition 2 | |
|---|---|
| Pigment dispersion B (pigment: C.I. | |
| Pigment Yellow 128) | 25 wt%. |
| Glycerin | 12 wt% |
| Triethylene glycol monobutyl ether | 5 wt% |
| Surfynol 465 | 1 wt% |
| Triethanolamine | 0.7 wt% |
| Ethylene glycol | 8 wt% |
| 2-Pyrrolidone | 4 wt% |
| EDTA | 0.05 wt% |
| Ultrapure water | Balance |

| Ink composition 3 | |
|---|---|
| Pigment dispersion C (pigment: C.I. | |
| Pigment Blue 15 : 3) | 14 wt% |
| Glycerin | 16 wt% |
| Triethylene glycol monobutyl ether | 5 wt% |
| Surfynol 465 | 1 wt% |
| Triethanolamine | 0.7 wt% |
| Ethylene glycol | 8 wt% |
| 2-Pyrrolidone | 4 wt% |
| EDTA | 0.05 wt% |
| Ultrapure water | Balance |

| Ink composition 4 | |
|---|---|
| Pigment dispersion D | |
| (pigment: carbon black) | 15 wt% |
| Glycerin | 10 wt% |
| Diethylene glycol | 5 wt% |
| Diethylene glycol monobutyl ether | 5 wt% |
| Olfine STG | 1 wt% |
| Triethanolamine | 0.7 wt% |
| Ethylene glycol | 2 wt% |
| 2-Pyrrolidone | 5 wt% |
| EDTA | 0.05 wt% |
| Ultrapure water | Balance |

| Ink composition 5 | |
|---|---|
| Pigment dispersion E (pigment: C.I. Pigment Red 122) | 25 wt% |
| Glycerin | 16 wt% |
| Diethylene glycol monobutyl ether | 6 wt% |
| Surfynol 465 | 1.0 wt% |
| Triethanolamine | 0.9 wt% |
| 2-Pyrrolidone | 3 wt% |
| EDTA | 0.05 wt% |
| Ultrapure water | Balance |

| Ink composition 6 | |
|---|---|
| Pigment dispersion F (pigment: C.I. | |
| Pigment Yellow 74) | 30 wt% |
| Glycerin | 12 wt% |
| Triethylene glycol monobutyl ether | 5 wt% |
| Olfine STG | 1 wt% |
| Triethanolamine | 0.5 wt% |
| Ethylene glycol | 2 wt% |
| 2-Pyrrolidone | 4 wt% |
| EDTA | 0.05 wt% |
| Ultrapure water | Balance |

| Ink composition 7 | |
|---|---|
| Pigment dispersion G (pigment: C.I. | |
| Pigment Blue 15 : 3) | 15 wt% |
| Glycerin | 15 wt% |
| Diethylene glycol | 5 wt% |
| Triethylene glycol monobutyl ether | 5 wt% |
| Olfine STG | 1 wt% |
| Triethanolamine | 0.7 wt% |
| 2-Pyrrolidone | 5 wt% |
| EDTA | 0.05 wt% |
| Ultrapure water | Balance |

| Ink composition 8 | |
|---|---|
| Pigment dispersion H | |
| (pigment: carbon black) | 20 wt% |
| Glycerin | 12 wt% |
| Triethylene glycol monobutyl ether | 5 wt% |
| Surfynol 465 | 0.8 wt% |
| Triethanolamine | 0.9 wt% |
| Ethylene glycol | 5 wt% |
| 2-Pyrrolidone | 2 wt% |
| EDTA | 0.05 wt% |
| Ultrapure water | Balance |

| Ink composition 9 | |
|---|---|
| Pigment dispersion A (pigment: C.I. | |
| Pigment Red 122) | 20 wt% |
| Glycerin | 15 wt% |
| Surfynol 465 | 0.9 wt% |
| Triethanolamine | 0.7 wt% |
| 1,2-Hexanediol | 4 wt% |
| Ethylene glycol | 8 wt% |
| 2-Pyrrolidone | 3 wt% |
| EDTA | 0.05 wt% |
| Ultrapure water | Balance |

| Ink composition 10 | |
|---|---|
| Pigment dispersion B (pigment: C.I. | |
| Pigment Yellow 128) | 25 wt% |
| Glycerin | 13 wt% |
| Surfynol 465 | 1 wt% |
| Triethanolamine | 0.7 wt% |
| 1,2-Hexanediol | 3 wt% |
| Ethylene glycol | 9 wt% |
| 2-Pyrrolidone | 4 wt% |
| EDTA | 0.05 wt% |
| Ultrapure water | Balance |

| Ink composition 11 | |
|---|---|
| Pigment dispersion C (pigment: C.I. | |
| Pigment Blue 15 : 3) | 14 wt% |
| Glycerin | 16 wt% |
| Surfynol 465 | 1 wt% |
| Triethanolamine | 0.7 wt% |
| 1,2-Hexanediol | 3 wt% |
| Ethylene glycol | 9 wt% |
| 2-Pyrrolidone | 4 wt% |
| EDTA | 0.05 wt% |
| Ultrapure water | Balance |

| Ink composition 12 | |
|---|---|
| Pigment dispersion D | |
| (pigment: carbon black) | 15 wt% |
| Glycerin | 10 wt% |
| Diethylene glycol | 5 wt% |
| Olfine STG | 1 wt% |
| Triethanolamine | 0.7 wt% |
| 1,2-Hexanediol | 3 wt% |
| Ethylene glycol | 4 wt% |
| 2-Pyrrolidone | 5 wt% |
| EDTA | 0.05 wt% |
| Ultrapure water | Balance |

| Ink composition 13 | |
|---|---|
| Pigment dispersion E (Pigment: C.I. | |
| Pigment Red 122) | 25 wt% |
| Glycerin | 15 wt% |
| Diethylene glycol monobutyl ether | 6 wt% |
| 1,2-Hexanediol | 3 wt% |
| BYK-348 | 0.5 wt% |
| Triethanolamine | 0.9 wt% |
| 2-Pyrrolidone | 3 wt% |
| EDTA | 0.05 wt% |
| Ultrapure water | Balance |

| Ink composition 14 | |
|---|---|
| Pigment dispersion F (Pigment: C.I. | |
| Pigment Yellow 74) | 30 wt% |
| Glycerin | 11 wt% |
| Triethylene glycol monobutyl ether | 5 wt% |
| 1,2-Hexanediol | 3 wt% |
| BYK-348 | 0.5 wt% |
| Triethanolamine | 0.5 wt% |
| Ethylene glycol | 2 wt% |
| 2-Pyrrolidone | 3 wt% |
| EDTA | 0.05 wt% |
| Ultrapure water | Balance |

| Ink composition 15 | |
|---|---|
| Pigment dispersion G (Pigment: C.I. | |
| Pigment Blue 15 : 3) | 15 wt% |
| Glycerin | 15 wt% |
| Diethylene glycol | 3 wt% |
| Triethylene glycol monobutyl ether | 5 wt% |
| 1,2-Hexanediol | 3 wt% |
| BYK-348 | 0.5 wt% |
| Triethanolamine | 0.7 wt% |
| 2-Pyrrolidone | 5 wt% |
| EDTA | 0.05 wt% |
| Ultrapure water | Balance |

| Ink composition 16 | |
|---|---|
| Pigment dispersion H | |
| (Pigment: carbon black) | 20 wt% |
| Glycerin | 12 wt% |
| Triethylene glycol monobutyl ether | 5 wt% |
| 1,2-Hexanediol | 3 wt% |
| BYK-348 | 0.5 wt% |
| Triethanolamine | 0.9 wt% |
| Ethylene glycol | 5 wt% |
| 2-Pyrrolidone | 2 wt% |
| EDTA | 0.05 wt% |
| Ultrapure water | Balance |

### Print evaluation test

The ink compositions prepared above were printed by means of an ink jet printer "EM-900C," manufactured by Seiko Epson Corporation, under conditions of an amount of ink ejected of 0.040 µg per 1/360 dpi and a resolution of 360 dpi x 360 dpi on a specialty recording medium for ink jet recording (a specialty glossy film, manufactured by Seiko Epson Corporation).

### Evaluation 1: Printing stability

The ink composition was loaded into the printer, and was then continuously printed at room temperature or 40°C (20% RH). At that time, inspection was performed for dropouts of dots and scattering of ink. The results were evaluated according to the following criteria. The evaluation results were as shown in the following table.
A: The number of times of dropouts of dots or scattering of ink after the elapse of 48 hr or more from the start of the printing was less than 10.
B: The number of times of dropouts of dots or scattering of ink after the elapse of 48 hr or more from the start of the printing was 10.
C: The number of times of dropouts of dots or scattering of ink after the elapse of 24 hr from the start of the printing was 10.
D: The number of times of dropouts of dots or scattering of ink after the elapse of 24 hr from the start of the printing was more than 10.

### Evaluation 2: Anti-clogging property

The ink composition was loaded into the printer in its recording head, and alphameric characters were continuously printed for 10 min. Thereafter, the printer was stopped, and allowed to stand for two weeks without capping under an environment of temperature 40°C and humidity 25% RH. After the standing, alphameric characters were printed again to determine the number of cleaning operations necessary for print quality equal to that before the standing to be obtained. The results were evaluated according to the following criteria. The evaluation results were as shown in the following table.
A: Print quality equal to the initial print quality could be obtained after 0 to 2 cleaning operations.
B: Print quality equal to the initial print quality could be obtained after 3 to 5 cleaning operations.
C: Six or more cleaning operations were necessary for providing print quality equal to the initial print quality.

### Evaluation 3: Fixation of ink

Blotted images and characters were printed on the above recording medium. Immediately after that, the printed face of the recording medium was strongly rubbed with a finger under an environment of 25°C and humidity 50% RH. The results were evaluated according to the following criteria. The evaluation results were as shown in the following table.
A: Neither smearing of the print nor the separation of the ink took place.
B: Smearing of the print and the separation of ink slightly took place on a level such that characters could still be distinguished from one another.
C: Both smearing of the print and the separation of ink took place.

### Evaluation 4: Storage stability of ink

The ink composition (50 g) was weighed in a Teflon bottle, and the Teflon bottle was then hermetically sealed. The ink composition was allowed to stand in this state at 70°C for 10 days. After the standing, the ink composition was measured for properties, that is, the viscosity and the particle size distribution. The results were evaluated according to the following criteria. The evaluation results were as summarized in the following table.
A: The difference in measurements of viscosity and particle size distribution between before the standing and after the standing was less than 2% by weight.
B: The difference in measurements of viscosity and particle size distribution between before the standing and after the standing was less than 5% by weight.
C: The difference in measurements of viscosity and particle size distribution between before the standing and after the standing was less than 10% by weight.
D: The difference in measurements of viscosity and particle size distribution between before the standing and after the standing was not less than 10% by weight.

| | Evaluation tests | | | |
|---|---|---|---|---|
| Ink composition | 1 | 2 | 3 | 4 |
| | Room temp. /40°C | | | |
| 1 | A/B | A | A | A |
| 2 | A/B | A | A | A |
| 3 | A/A | A | A | A |
| 4 | A/A | A | A | A |
| 5 | A/A | A | A | A |
| 6 | A/B | A | A | A |
| 7 | A/B | A | A | A |
| 8 | A/A | A | A | A |
| 9 | A/B | A | A | A |
| 10 | A/A | A | A | A |
| 11 | A/A | A | A | A |
| 12 | A/A | A | A | A |
| 13 | A/A | A | A | A |
| 14 | A/A | A | A | A |
| 15 | A/A | A | A | A |
| 16 | A/A | A | A | A |
| 17 | A/A | A | A | A |
| 18 | A/A | A | A | A |

## Claims

1. An ink composition for ink jet recording, comprising a colorant, a penetrating agent, a water-soluble organic solvent, and water,
said colorant comprising a pigment coated with a resin which is a polymer having an anionic group, the content of the pigment being in the range of 35 to 90% by weight based on the colorant,
said penetrating agent comprising
(a) 0.1 to 5% by weight, based on the ink composition, of an acetylene glycol surfactant and/or
(b) a polysiloxane surfactant represented by formula (I) 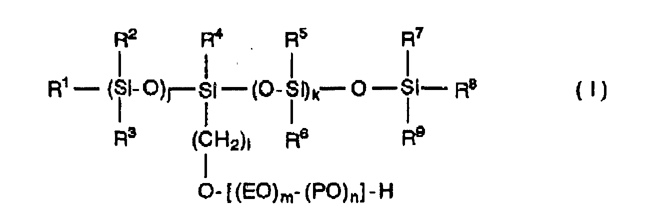 wherein
R¹ to R⁹ each independently represent a C₁₋₆ alkyl group,
j and k each independently represent an integer of 1 or more,
EO represents an ethyleneoxy group,
PO represents a propyleneoxy group,
m and n are an integer of 0 or more, provided that m + n is an integer of 1 or more, and
EO and PO may be arranged, regardless of order in the parentheses ([ ]), randomly or as blocks joined together,
said water-soluble organic solvent comprising
(c) 1 to 15% by weight, based on the ink composition, of an alkyl ether derivative of a polyhydric alcohol wherein the alkyl has 3 or more carbon atoms, and/or
(d) a 1,2-alkanediol.

2. The ink composition according to claim 1, wherein primary particles of the pigment have a maximum diameter of not more than 300 nm and an average diameter in the range of 10 to 100 nm.

3. The ink composition according to claim 1 or 2, wherein the colorant has a maximum particle diameter of not more than 1,000 nm and an average particle diameter of not more than 300 nm.

4. The ink composition according to any one of claims 1 to 3, wherein the resin has a number average molecular weight of 1,000 to 100,000.

5. The ink composition according to any one of claims 1 to 4, wherein the anionic group contained in the resin is one member or two or more members selected from the group consisting of carboxyl, sulfonic acid, and phosphonic acid groups.

6. The ink composition according to any one of claims 1 to 5, wherein the resin is in the form of a salt with an organic amine or an alkali metal.

7. The ink composition according to claim 6, wherein the salt of the resin with the alkali metal is a salt of the resin with potassium.

8. The ink composition according to any one of claims 1 to 7, wherein the resin has an acid value of not less than 30 KOH mg/g.

9. The ink composition according to any one of claims 1 to 8, wherein the colorant further comprises a curing agent or an additional polymer compound.

10. The ink composition according to any one of claims 1 to 9, wherein the colorant is in the form of a dispersion of a mixed melt, composed of the resin and the pigment, in water.

11. The ink composition according to claim 10, wherein the mixed melt further comprises a curing agent or an additional polymer compound.

12. The ink composition according to claim 10 or 11, wherein the mixed melt has been produced using an organic solvent as a solvent.

13. The ink composition according to any one of claims 1 to 9, wherein the colorant has been produced by providing a hydrous cake comprising the resin and the pigment and partially or entirely neutralizing the anionic groups contained in the resin in the hydrous cake with a basic compound.

14. The ink composition according to claim 13, wherein the hydrous cake further comprises a curing agent or an additional polymer compound.

15. The ink composition according to claim 13 or 14, wherein the hydrous cake has been produced by
dispersing the resin and the pigment in an alkaline aqueous medium and optionally heat-treating the dispersion to allow the resin to gel; and
bringing pH to a neutral value or the acid side to render the resin hydrophobic, thereby fixing the resin onto the pigment.

16. The ink composition according to claim 15, wherein a curing agent or an additional polymer compound is further added to the resin and the pigment to disperse the resin and the pigment in the alkaline aqueous medium.

17. The ink composition according to any one of claims 1 to 9, wherein
the colorant has been produced by a process comprising the steps of:
mixing an anionic group-containing resin or a solution of an anionic group-containing resin in an organic solvent with a basic compound, and neutralizing the mixture;
adding and dispersing a pigment in the mixture to prepare a pigment dispersion;
adding an acidic compound to the dispersion to precipitate an anionic group-containing resin, thereby coating the pigment with the anionic group-containing resin; and
adding a basic compound to neutralize the anionic groups in the anionic group-containing resin and dispersing the resin in an aqueous medium.

18. The ink composition according to any one of claims 1 to 17, wherein the alkyl ether derivative of the polyhydric alcohol is triethylene glycol monobutyl ether.

19. The ink composition according to any one of claims 1 to 18, wherein the 1,2-alkanediol is 1,2-hexanediol.

20. The ink composition according to any one of claims 1 to 17, wherein the acetylene glycol derivative is a compound represented by formula 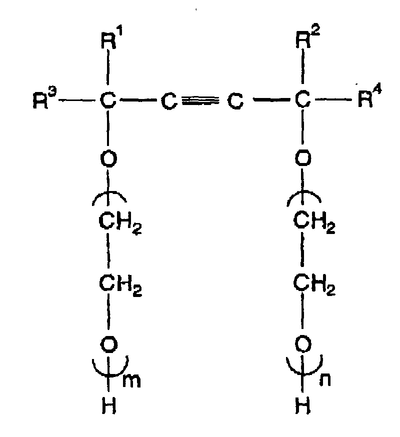 wherein 0 ≦ m + n ≦ 50; and R¹, R², R³, and R⁴ each independently represent an alkyl group.

21. The ink composition according to any one of claims 1 to 20, wherein the ink composition for ink jet recording is a cyan ink composition, a magenta ink composition, a yellow ink composition, an orange ink composition, a green ink composition, or a black ink composition.

22. The ink composition according to claim 21, wherein
the pigment as the colorant in the cyan ink composition is one member or a mixture of two or more members selected from the group consisting of C.I. Pigment Blue 15 : 3, 15 : 4, and 60,
the pigment as the colorant in the magenta ink composition is one member or a mixture of two or more members selected from the group consisting of C.I. Pigment Red 122, 202, and 209,
the pigment as the colorant used in the yellow ink composition is one member or a mixture of two or more members selected from the group consisting of C.I. Pigment Yellow 74, 109, 110, 128, and 138,
the pigment as the colorant used in the orange ink composition is C.I. Pigment Orange 36 or 43, and
the pigment as the colorant used in the green ink composition is C.I. Pigment Green 7 or 36.

23. The ink composition according to any one of claims 1 to 22, which has a surface tension of 20 to 40 mN/m.

24. An ink jet recording method comprising the steps of: ejecting droplets of an ink composition; and depositing the droplets onto a recording medium to perform printing, the ink composition being one according to any one of claims 1 to 23.

25. A record produced by the recording method according to claim 24.
